# EUROPEAN PATENT APPLICATION

(11) **EP 2 341 711 A2**
(43) Date of publication of application: **06.07.2011**
(21) Application number: 10196533.3
(22) Date of filing: 22.12.2010
(51) Int. Cl.: H04N 13/00

(54) **A three dimensional (3D) display system**

(30) Priority: 30.12.2009 TR 200910029
(71) Applicant: Vestel Elektronik Sanayi ve Ticaret A.S., 45030 Manisa (TR)
(72) Inventor: Gucbilmez, Alp, 35040, Izmir (TR); Karsli, Kivanc, 35540, Izmir (TR)
(74) Representative: Cayli, Hülya

(57) **Abstract**

Each pixel of the display system of the invention comprises two sub pixel groups that ensure two separate pixel displays, having different polarizations, are displayed through the same pixel. Each of these sub pixel groups comprises three light sources (R, G, B); therefore said application comprises a screen in which each pixel has six R, G, B light sources. Three of the light sources are "s-polarized" (s-polarized red: Rs, s-polarized green: Gs, s-polarized blue: Bs) and constitute s-polarized sub pixel group; three of the light sources are p-polarized (p-polarized red: Rp, p-polarized green: Gp, p-polarized blue: Bp) and constitute p-polarized sub pixel group.

## Description

### Technical Field

The present invention relates to three-dimensional (3D) display techniques, more particularly to a three-dimensional display system.

### Prior Art

Three-dimensional display techniques (stereoscopic displaying), which arouse viewer's sense of reality by taking the display out of the screen, can be applied over a flat surface particularly by projection method and is used in movie technology.

Three-dimensional projection and display systems of various types exist in the prior art. A known approach comprises two projectors. On a screen, one of the projectors creates an display to be perceived by the right eye while the other creates an display to be perceived by the left eye. Each display has its own polarization (S or P). The display generated on the screen is created by projecting these two displays, which have different polarizations, on each other or displaying them on the same surface. Polarized glasses that enable perception of stereoscopic images are utilized in order to allow the viewer to percept the three-dimensional display.

The document US 5 982 541 discloses a projection display system comprising a light source for generating an input light beam; a polarizing beam discriminator for separating "s" and "p" polarized light beams from said input beam; three-dimensional light modulators for encoding an image onto said respective "s" and "p" polarized beams; means for combining said encoded "s" and "p" polarized beams into an output beam, and means for focusing the output beam onto a display means.

The invention disclosed in the document US 4 995 718 comprises a compact display system comprising a single projection display. The system comprises first source means for providing a first image having a first color and a first polarization; second source means for providing a second image having a second color and a second polarization; polarization switching means for switching the first polarization to the second polarization and vice versa; combining means for combining the first and the second images into a third image. The combined image is projected onto a screen and the user can watch the three-dimensional display by means of a polarized glasses.

The systems of the prior art offers solutions based on projecting the displays coming from two different sources onto a plane or projecting displays coming from only one source onto a single plane by applying different polarizations. Since these systems require use of two different sources of light, an optical combiner and/or optical polarizers, it is impossible to make the said methods fit for a compact screen technology (a television, for instance, which provides three-dimensional display) that provides three-dimensional display. Furthermore, the display obtained through said systems causes a drop in the resolution due to the losses occurred in optical combiner and optical polarizers until the images taken from two different sources of image reach the screen. In addition, display quality may be decreased in the case that synchronization of the images obtained from different sources of image fails. Since display resolution and quality depend on a number of factors in known three dimensional display systems and said systems require use of various light sources and optical combiners, application of these technologies to any kind of screen, for instance on a television screen, is not possible.

### Objective of the Invention

The aim of the invention is to provide a three-dimensional display system wherein the low resolution problem that occurs in the known three-dimensional displaying techniques is eliminated.

Another aim of the invention is to provide a three-dimensional display system that can be applied to any kind of screen.

### Brief Description of Drawings

Figure 1 comprises an exemplary view of the light sources in each pixel of the three-dimensional display system of the present invention.
Figure 2 comprises an exemplary view of the polarized glasses utilized together with the system of the invention in order to perceive three-dimensional display.
Figure 3 comprises an exemplary view of the polarized glasses utilized together with the system of the invention so that two viewers can watch two different displays two dimensionally at the same time.

### Disclosure of the Invention

Three-dimensional displaying or stereoscopic displaying is a technique developed for recording three-dimensional visual information or creating a depth illusion on a display. Depth illusion in pictures, films or other two-dimensional displays is created by displaying partially different images to each eye.

Commonly applied methods of the prior art comprises the steps of projecting two different displays, having different polarizations (s and p polarization), on each other on a screen and ensuring, by means of polarized glasses, that each eye of the viewer perceives a different display. These methods, however, require use of two individual light sources, optical polarizers and optical combiners; and in addition to the fact that this situation makes said methods impractical to be conveyed to a compact screen, it is impossible to reduce the dimensions of the screen, on which a three-dimensional display is created, below a certain level. The quality and the resolution of the three-dimensional display obtained by said methods depend on many factors such as losses incurred by the display and synchronization of the two images.

The present invention aims to form an all-purpose, three-dimensional display system, which is applicable to various screen sizes, wherein display resolution does not depend on the above mentioned factors.

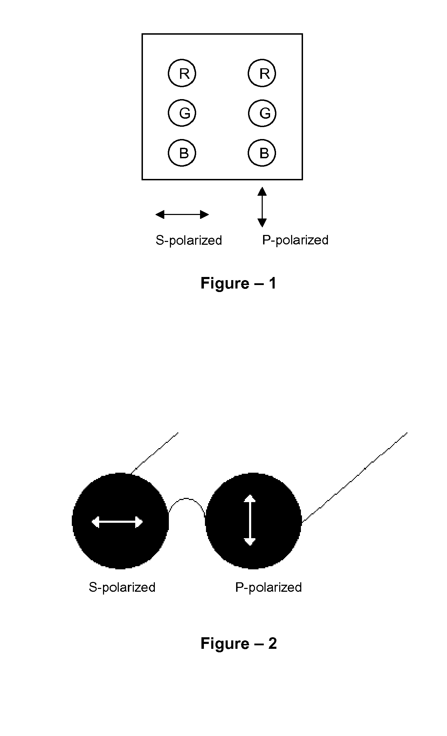

Each pixel of the display system of the invention comprises two sub pixel groups which ensure that two different pixel views, having different polarizations, are displayed through the same pixel. Each of these sub pixel groups comprises at least one, preferably three light sources (R, G, B); therefore, said system comprises a screen where each pixel has six R, G, B light sources. An exemplary view of the light sources in each pixel is illustrated in Figure 1. As can be seen in the figure, three of these light sources are "s-polarized"; (s-polarized red: Rs, s-polarized green: Gs, s polarized blue: Bs) and constitute s-polarized sub pixel group; three of the light sources are "p-polarized" (p-polarized red: Rp, p-polarized green: Gp, p-polarized blue: Bp) and constitute p-polarized sub pixel group.

Two individual displays are projected on the screen. One of these displays is projected by s-polarized sub pixel groups (Rs, Gs, Bs), and the other one is projected by p-polarized sub pixel groups (Rp, Gp, Bp). Thus, two superpositioned displays that have different polarizations will be on the screen. According to an embodiment of the method of the invention, these two displays have been developed for arousing viewer's sense of three-dimensional display, and comprise two different perspectives (displays from two different angles of view) of the same display. For instance, s-polarized sub pixel groups projects the part (left perspective) of the three-dimensional display that is to be perceived by the left eye while p-polarized sub pixel groups projects the right perspective of the display (vice versa).

It is ensured that the each eye of the viewer perceives only one polarization by means of polarized glasses an exemplary view of which is shown in Figure 2. As can be seen in the figure, one glass of the polarized glasses, which is s-polarized, allows s-polarized beams to pass and filters the others while other glass, on the contrary, allows p-polarized beams to pass and filters the others (s-p or p-s). Thus, it is ensured that each eye of the viewer perceives a different display (different perspectives of the same display); and the display, received by both eyes, gains depth as it is combined within the human brain.

The display system of the invention is applicable to general purpose display systems e.g. television screen, computer monitors etc. The light sources in each pixel are preferably laser diodes. As the size of laser diodes gets smaller thanks to the advancement of technology, use of the system on smaller-sized screens will be possible.

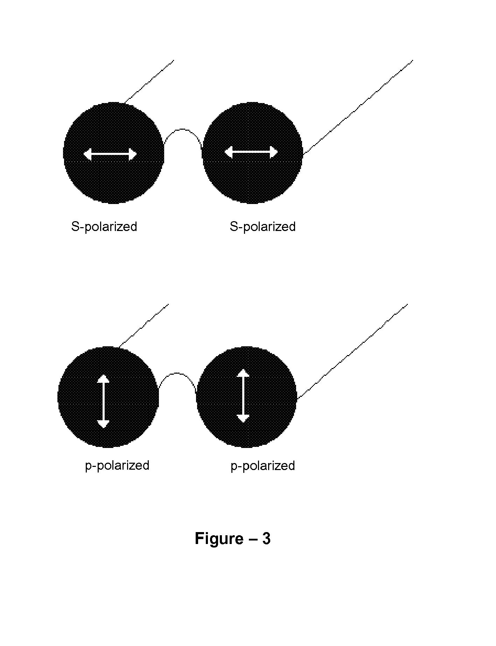

In another embodiment of the system of the invention, instead of the different perspectives of the same pixel display, two different displays are projected by each sub pixel group. For instance, one of the two separate films is projected by s-polarized sub pixels while the other is projected by p-polarized sub pixels. An exemplary view of the polarized glasses utilized in this embodiment of the invention is illustrated in Figure 3. Unlike the previous one, Figure 3 shows two separate glasses (s-s and p-p) both sides of which are in the same polarization. Thus, it is ensured that two individual viewers can watch two separate displays at the same time. However, each of the two separate displays perceived by two individual users will be two dimensional in this way.

For instance, the film projected by s-polarized sub pixel groups will be seen by a viewer who wears s-s polarized glasses while it will not be seen by a viewer wearing p-p polarized glasses. Likewise, the film projected by p-polarized sub pixel groups will be seen by a viewer that wears p-p polarized glasses. Therefore, two separate films can be individually watched two dimensionally on the same screen.

In both of the embodiments of the system, the two superpositioned displays on the screen will be seen as a mixed up display in the case that polarized glasses are not worn.

The system of the invention comprises an image processor which ensures that a pixel display, which is different from each sub pixel groups (light sources) that have different polarizations, is displayed. Obtaining, by means of said system, pixel displays each of which has polarizations different from each of the sub pixel ensures that resolution of a screen where this system is applied, can be adjusted to a desired level according to the number of pixels applied on the screen. Furthermore, use of laser diodes in said display system makes it possible to apply three-dimensional display technology to a compact screen system and to a screen having relatively smaller sizes compared to the systems of the prior art.

## Claims

1. A display system which ensures that two separate displays, having two different polarizations, are displayed on the same screen in a superposed state and that a viewer can perceive the display on the screen by means of polarized glasses, comprising
- a screen in which two sub pixel groups having different polarizations are present in each pixel thereof,
- a processor ensuring that a pixel display different from each sub pixel group is displayed.

2. A system according to Claim 1 **characterized in that** said sub pixel groups comprise
- s-polarized sub pixel group comprising s-polarized red: Rs, s-polarized green: Gs, s- polarized blue: Bs light sources,
- p-polarized sub pixel group comprising p- polarized red: Rp, p- polarized green: Gp, p- polarized blue: Bp light sources.

3. A system according to Claim 2 **characterized in that** said light sources are laser diodes.

4. A system according to Claim 1 **characterized in that** it comprises said processor which ensures that, one of the two different perspectives of the same display is projected by s-polarized sub pixel group while the other one is projected by p-polarized sub pixel group so that a viewer can perceive the display on the screen three dimensionally.

5. A system according to Claim 1 or Claim 4 **characterized in that** one glass of said polarized glasses is s-polarized and the other glass is p-polarized.

6. A system according to Claim 1 **characterized in that** it comprises said processor ensuring that, one of the two different displays is projected by s-polarized sub pixel group while the other one is projected by p-polarized sub pixel group so that each of the two individual viewers can watch different displays on the same screen.

7. A system according to Claim 6 **characterized in that** both glasses of the said polarized glasses are s-polarized so that the display, one of said two different displays, which is projected by s-polarized sub pixel groups can be seen two dimensionally.

8. A system according to Claim 6 **characterized in that** both glasses of the said polarized glasses are p-polarized so that the display, one of said two different images, which is projected by p-polarized sub pixel groups can be seen two dimensionally.
